# EUROPÄISCHE PATENTSCHRIFT

(11) **EP 1 281 597 B1**
(45) Veröffentlichungstag und Bekanntmachung des Hinweises auf die Patenterteilung: **26.09.2007**
(21) Anmeldenummer: 02016260.8
(22) Anmeldetag: 22.07.2002
(51) Int. Cl.: B62D 1/04, B60K 37/06, B60Q 1/00

(54) **Fahrzeuglenkrad**
Vehicle steering wheel
Volant de véhicule

(30) Priorität: 01.08.2001 DE 20112718 U
(43) Veröffentlichungstag der Anmeldung: 05.02.2003
(73) Patentinhaber: TRW Automotive Safety Systems GmbH, 63743 Aschaffenburg (DE)
(72) Erfinder: Kreuzer, Martin, 63839 Kleinwallstadt (DE)
(74) Vertreter: Kitzhofer, Thomas

(56) Entgegenhaltungen:
- WO-A-01/60650
- DE-A- 19 625 966
- US-A- 4 590 340

## Beschreibung

Die Erfindung betrifft ein Fahrzeuglenkrad nach dem Oberbegriff des Anspruchs 1.

Der zunehmende Einsatz von Elektronik in Fahrzeugen bringt einen ständig wachsenden Funktionsumfang mit sich, auf den der Fahrer des Fahrzeugs während der Fahrt Einfluß nehmen kann. Dazu gehört neben der Bedienung einer Lüftung oder einer Klimaanlage z.B. die Betätigung eines Mobiltelefons oder eines Radios. Es ist bekannt, zur Bedienung derartiger Funktionen zusätzliche Schalter am Lenkrad, z.B. im Bereich des Gassackmoduls vorzusehen. Ein anderer geeigneter Ort für derartige Schalter sind die Speichen des Lenkrads. Die Anordnung eines Schalters in Reichweite der Finger des Fahrzeuglenkers, wenn sich dessen Hände am Lenkrad befinden, erhöht eindeutig die Fahrsicherheit. Die gattungsbildende DE 196 25 966 A1 zeigt einen Schalter, der beweglich an einem Lenkstock angeordnet ist.

Die Erfindung dient dazu, die Bedienung eines oben beschriebenen Schalters für den Fahrzeuglenker komfortabler zu machen und damit die Fahrsicherheit zu verbessern.

Dies wird bei einem gattungsgemäßen Fahrzeuglenkrad mit den Merkmalen des Anspruchs 1 erreicht. Unter einem Lenkradkörper ist hier z.B. die Kombination aus einem Lenkradskelett mit einer dieses Skelett vollständig oder teilweise umgebenden Umschäumung zu verstehen. Der Vorteil der Erfindung liegt darin, daß jeder Fahrer, passend zu seiner jeweiligen Handgröße und Fingerlänge, sich die Position des Schalters individuell bequem einstellen kann, so daß er ihn einfach betätigen kann, ohne vom Verkehrsgeschehen abgelenkt zu sein. Unter Verschiebung des Schalters ist natürlich nicht die Verschiebung in andere Schaltstellungen gemeint, bei der eine Abstandsänderung eines betätigten Schalterteils zum Lenkrad z.B. beim Ein- und Ausschalten erfolgt. Vielmehr ist die Verschiebung des Schalters oder eines Schalterteils gemäß der Erfindung unabhängig von der funktionalen Schalterstellung. Der Schalter ist ergonomisch und an das Design des Lenkrads angepaßt an einer Speiche des Lenkradkörpers befestigt und längs derselben verschiebbar gestaltet sein.

Um die Verstellung möglichst bequem zu gestalten, ist die Lagerung des Schalters vorzugsweise so ausgebildet, daß die Verstellung ohne Zuhilfenahme eines Werkzeugs vom Fahrer vorgenommen werden kann. Der Fahrer kann so jederzeit den Schalter in eine passende Position verschieben.

Bevorzugt ist der Schalter in einer Linearführung aufgenommen. Vorteilhaft ist das Lenkrad so gestaltet, daß der Schalter zur Montage quer zur Verstellrichtung in die Linearführung einsetzbar ist, um durch anschließende Verschiebung in der Linearführung gehaltert zu sein. Diese Gestaltung ermöglicht gleichzeitig eine einfache Montage des Schalters am Lenkrad und eine sichere Führung des Schalters bei einer Verschiebung.

In einer bevorzugten Ausführungsform der Erfindung ist eine lösbare formschlüssige Verbindung vorgesehen, die in jeder Position des Schalters verriegelt werden kann. Diese formschlüssige Verbindung ist bevorzugt eine gezahnte Struktur, in die eine Gegenverzahnung am Schalter eingreift. Eine Verzahnung erlaubt eine feine Abstufung der möglichen Verschiebepositionen bei einfacher und billiger Herstellung des Mechanismus.

Um den Verstellmechanismus zu betätigen, ist vorzugsweise vorgesehen, daß der dem Schalter zugeordnete Teil der formschlüssigen Verbindung quer zur Verstellrichtung aus einer verriegelten Position in eine Verfahrposition bewegbar ist, in der eine Verstellung des Schalters erlaubt wird, wobei der dem Schalter zugeordnete Teil der formschlüssigen Verbindung anschließend wieder in eine andere verriegelte Position bewegt wird. Die formschlüssige Verbindung kann z.B. dadurch entriegelt werden, daß der Fahrer ein Verstellglied gedrückt hält und den Schalter verschiebt, wobei nach dem Loslassen des Verstellgliedes der Schalter automatisch in seiner neuen Position verriegelt wird.

Vorzugsweise ist das Verstellglied auf der Lenkradrückseite angeordnet und mit dem Schalter verbunden, so daß der Schalter über das Verstellglied verschoben werden kann.

Bevorzugt ist am Verstellglied ein Rastzapfen angeformt, der den schalterseitigen Teil der formschlüssigen Verbindung bildet. Außerdem kann das Verstellglied über einen biegsamen Lagerungsarm mit dem Schalter verbunden sein, wobei durch Biegen des Lagerungsarms der Rastzapfen aus der verriegelten Position in die Verfahrposition gebracht wird. Diese Konstruktion ist einfach, platzsparend und günstig in der Herstellung.

In einer bevorzugten Ausführungsform der Erfindung ist der Schalter als Multifunktionstastatur ausgeführt. Eine derartige Multifunktionstastatur erlaubt es, mit nur wenigen Schaltelementen eine unbegrenzte Anzahl von Funktionen zu bedienen.

Die Herstellung kann noch weiter vereinfacht werden, indem der Schalter Teil einer als vormontierte Baugruppe ausgebildeten Schaltereinheit ist, die ein am Lenkradkörper starr befestigtes Gehäuse aufweist, in welchem der Schalter verschiebbar gelagert ist. Das Gehäuse kann z.B. durch eine Rastverbindung am Lenkradkörper befestigt sein, so daß die Baugruppe nur in den Lenkradkörper eingesteckt werden muß.

Die nachfolgende Beschreibung eines Ausführungsbeispiels verdeutlicht die Erfindung im Zusammenhang mit den beigefügten Zeichnungen näher. In den Zeichnungen zeigen:
- Figur 1 eine Querschnittsansicht einer Speiche eines erfindungsgemäßen Lenkrads;
- Figur 2 einen Ausschnitt der Unterseite eines erfindungsgemäßen Lenkrads;
- Figur 3 eine schematische Ansicht einer Baugruppe mit einem Schalter zur Verwendung in einem erfindungsgemäßen Lenkrad; und
- Figur 4 eine Schnittansicht der Baugruppe aus Figur 3.

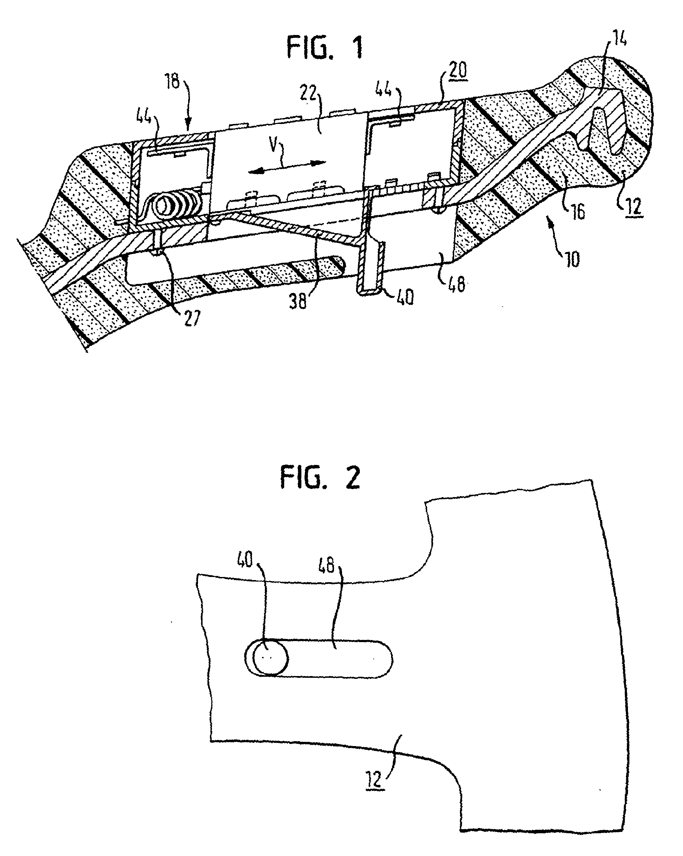

In Figur 1 ist eine Speiche 10 eines Lenkrades dargestellt. Die Speiche 10 ist Teil eines Lenkradkörpers 12, der in diesem Fall ein starres Skelett 14 und eine das Skelett 14 umgebende Umschäumung 16 enthält. Der Lenkradkörper 12 kann aber auch auf beliebige anderen Weg gebildet sein, da seine Ausbildung für das Erfindungsprinzip unwesentlich ist.

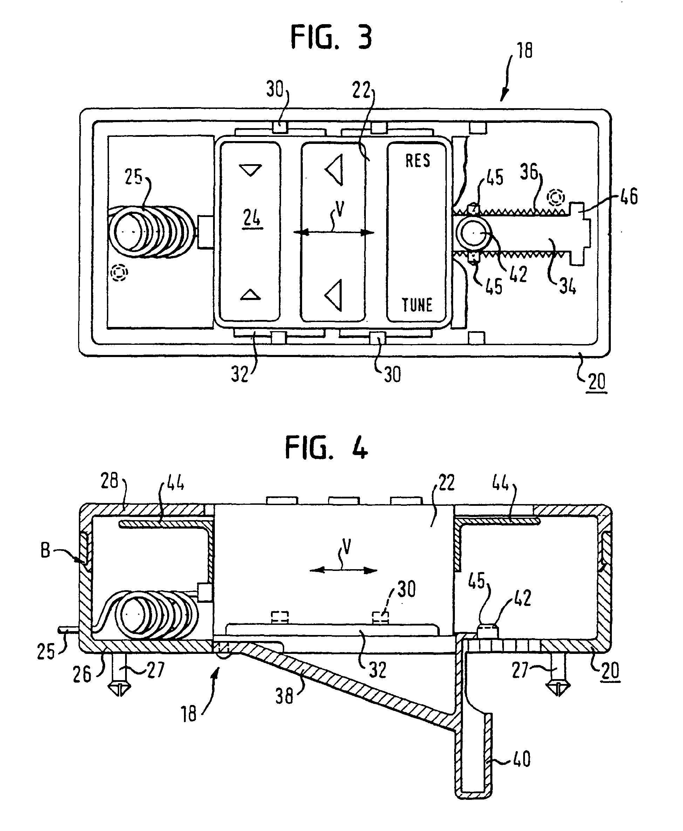

In die Speiche 10 ist eine Schaltereinheit 18 integriert, die als Baugruppe aus einem Gehäuse 20 und einem im Gehäuse 20 verschiebbar gelagerten Schalter 22 gebildet ist. Der Schalter 22 ist in diesem Beispiel eine Multifunktionstastatur mit Tasten 24 (Figur 3), die für beliebige Fahrzeugfunktionen eingesetzt werden kann. Der Schalter 22 ist mit einem Kabel 25 verbunden, das aus dem Gehäuse 20 herausgeführt ist und in Verbindung mit einer nicht gezeigten Fahrzeugelektronik steht, um Signale von den Tasten 24 des Schalters 22 an diese Elektronik zu übertragen. Der Teil des Kabels 25, der im Inneren des Gehäuses 20 verläuft, ist spiralförmig gewunden, um den Verstellweg des Schalters 22 ausgleichen zu können.

In den Figuren 3 und 4 ist die Schaltereinheit 18 näher dargestellt. Das Gehäuse 20 besteht aus einem Bodenteil 26 und einem Deckelteil 28, die durch eine Rastverbindung B zum Gehäuse 20 geschlossen werden können. Am Bodenteil 26 sind Rastelemente 27 ausgebildet, mit denen die Schaltereinheit 18 am Lenkradkörper 12 verrastet werden kann.

Das Deckelteil 28 weist eine Öffnung auf, die so ausgelegt ist, daß der im Gehäuse 20 angeordnete Schalter 22, dessen Oberseite bevorzugt mit dem Deckelteil 28 in einer Ebene liegt, in jede gewünschte Verstellposition gebracht werden kann. Die Längserstreckung der Öffnung ist auf den Verstellweg des Schalters abgestimmt. Aus optischen Gründen sowie als Schutz vor Verschmutzung und Beschädigung, sind am Schalter 22 Blenden 44 angeordnet. Die Blenden 44 sind so ausgebildet, daß sie jeweils den Teil der Öffnung im Deckelteil 28, der nicht vom Schalter 22 ausgefüllt wird, verschließen. Die Blenden 44 können auch als Faltenbalg gestaltet sein.

Der Schalter 22 weist Laschen 32 auf, die zwischen dem Boden des Gehäuses 20 und an der Unterseite von am Bodenteil 26 ausgebildeten Vorsprüngen 30 aufgenommen sind. Boden und Vorsprünge 30 bilden eine Linearführung, in der der Schalter 22 verschiebbar gehalten ist. Die Vorsprünge 30 sind so im mittleren Bereich des Bodenteils 26 angeordnet, daß ein einfaches Einsetzen des Schalters 22 in das Gehäuse 20 möglich ist, wie noch beschrieben werden wird. Der Schalter 22 wird, unabhängig von seiner aktuellen Position, immer von vier Vorsprüngen 30 gehalten.

Im Bodenteil 26 ist ein Langloch 34 vorgesehen, dessen Längsseiten eine gezahnte Struktur 36 aufweisen. Die Längserstreckung des Langlochs 34 ist auf die Länge des möglichen Verstellwegs des Schalters 22 abgestimmt.

Der Schalter 22 ist mit einem biegsamen Lagerungsarm 38 verbunden, der wiederum ein Verstellglied 40 aufweist. Am Verstellglied 40 ist ein Rastzapfen 42 angeformt. Der Rastzapfen 42 weist Zähne auf, die mit den Zähnen der gezahnten Struktur 36 eine formschlüssige Verbindung eingehen, solange der Lagerungsarm 38 in einer verriegelten Position ist.

Das Verstellglied 40 kann von oben, d.h. quer zum Verstellweg V in das Gehäuse 20 hineingedrückt werden, wodurch der Rastzapfen 42 von den Zähnen der gezahnten Struktur 36 gelöst wird. Der Schalter 22 ist nun in eine Verfahrposition gebracht. Am Verstellglied 40 kann der Schalter 22 im Gehäuse 20 bis zur gewünschten Position verschoben werden. Beim Loslassen des Verstellglieds 40 bewegt sich der Lagerungsarm 38 aufgrund seiner Eigenelastizität zurück in seine Ausgangslage, wobei die Zähne des Rastzapfens 42 an einer anderen Stelle in die gezahnte Struktur 36 eingreifen und so den Schalter 22 wieder verrasten. Um eine definierte vertikale Lage des Verstellglieds 40 sicherzustellen, ist ein aus zwei seitlichen Fortsätzen gebildeter Anschlag 45 am Rastzapfen 42 über den beiden Rastzähnen und seitlich über diese vorstehend vorgesehen, der in verriegelter Position in Anlage mit der Oberseite des Bodenteil 26 ist.

Die Montage der Schaltereinheit 18 geht einfach und schnell vonstatten. Zuerst wird die Schaltereinheit 18 zusammengesetzt. Dazu wird in einem ersten Schritt der Schalter 22 an einem Ende des Bodenteils 26 eingesetzt. Wie in Figur 3 zu erkennen ist, sind die Vorsprünge 30 und die Laschen 32 so aufeinander abgestimmt, daß die Laschen 32 zunächst quer zur Verstellrichtung an den Vorsprüngen vorbeigeführt und anschließend zwischen Bodenteil 26 und Vorsprünge 30 geschoben werden können.

Nachdem der Schalter 22 in seiner Linearführung angeordnet ist, wird der Lagerungsarm 38 am Schalter 22 angebracht, z.B. durch eine Schraube. Danach muß der Schalter 22 noch einmal an das Gehäuseende mit dem Langloch 34 verschoben werden, an dessen Ende eine Verbreiterung 46 vorgesehen ist. Der Rastzapfen 42 taucht durch die Verbreiterung 46 hindurch und gelangt so in das Gehäuseinnere. Danach wird der Schalter 22 wieder in die Gehäusemitte verschoben, wobei der Rastzapfen 42 in die gezahnte Struktur 36 einrastet und den Schalter 22 im Gehäuse 20 fixiert. Abschließend wird noch das Deckelteil 28 auf das Bodenteil 26 aufgesetzt und mit diesem verrastet, um das Gehäuse 20 zu schließen.

Die vormontierte Schaltereinheit 18 kann nun einfach am Lenkradkörper 12 befestigt werden, indem sie in eine am Lenkradkörper vorgesehene Ausnehmung eingesetzt und über die Rastelemente 27 mit dem Lenkradkörper 12 fest verbunden wird.

Wie in Figur 1 zu sehen ist, weist die Umschäumung 16 eine Öffnung 48 auf, durch die das Verstellglied 40 hinausragt. Die Längserstreckung dieser Öffnung 48 entspricht im wesentlichen dem maximalen Verstellweg des Schalters 22.

Ein Fahrer, der das Lenkrad umgreift, kann mit einem Finger an die Rückseite der Speiche 10 greifen und das Verstellglied 40 in die Speiche hineindrücken. Nun kann er den Schalter 22 an eine gewünschte Position verschieben. Sobald der Fahrer das Verstellglied 40 losläßt, verrastet der Schalter 22 in seiner neuen Position.

## Patentansprüche

1. Fahrzeuglenkrad, mit
einem Lenkradkörper (12),
einer Speiche (10),
und wenigstens einem elektrischen Schalter (22), wobei der Schalter (22) von einem Fahrer in verschiedene Positionen zur Anpassung an die Fingerlänge des Fahrers verschoben werden kann,
**dadurch gekennzeichnet, daß**
der Schalter (22) an der Speiche (10) des Lenkradkörpers (12) befestigt ist und er längs derselben relativ zum Lenkradkörper (12) verschiebbar ist.

2. Fahrzeuglenkrad nach Anspruch 1, **dadurch gekennzeichnet, daß** die Lagerung des Schalters (22) so ausgebildet ist, daß die Verstellung ohne Zuhilfenahme eines Werkzeugs vom Fahrer vorgenommen werden kann.

3. Fahrzeuglenkrad nach Anspruch 1 oder 2, **dadurch gekennzeichnet, daß** der Schalter (22) in einer Linearführung (26, 30, 32) aufgenommen ist.

4. Fahrzeuglenkrad nach Anspruch 3, **dadurch gekennzeichnet, daß** der Schalter (22) zur Montage quer zur Verstellrichtung in die Linearführung (26, 30, 32) einsetzbar ist, um durch anschließende Verschiebung in der Linearführung gehaltert zu sein.

5. Fahrzeuglenkrad nach einem der vorhergehenden Ansprüche, **dadurch gekennzeichnet, daß** eine lösbare formschlüssige Verbindung (36, 42) vorgesehen ist, die in jeder Position des Schalters (22) verriegelt werden kann.

6. Fahrzeuglenkrad nach Anspruch 5, **dadurch gekennzeichnet, daß** die formschlüssige Verbindung eine gezahnte Struktur (36) ist, in die eine Gegenverzahnung (42) am Schalter (22) eingreift.

7. Fahrzeuglenkrad nach Anspruch 5 oder 6, **dadurch gekennzeichnet, daß** der dem Schalter (22) zugeordnete Teil (42) der formschlüssigen Verbindung quer zur Verstellrichtung aus einer verriegelten Position in eine Verfahrposition bewegbar ist, in der eine Verstellung des Schalters (22) erlaubt wird, wobei der dem Schalter (22) zugeordnete Teil (42) der formschlüssigen Verbindung anschließend wieder in eine andere verriegelte Position bewegt wird.

8. Fahrzeuglenkrad nach einem der vorhergehenden Ansprüche, **gekennzeichnet durch** ein auf der Lenkradrückseite zu erfassendes Verstellglied (40), das mit dem Schalter (22) verbunden ist und über das der Schalter (22) verschoben wird.

9. Fahrzeuglenkrad nach einem der Ansprüche 5 bis 7 und nach Anspruch 8, **dadurch gekennzeichnet, daß** am Verstellglied (40) ein Rastzapfen (42) angeformt ist, der den schalterseitigen Teil der formschlüssigen Verbindung bildet.

10. Fahrzeuglenkrad nach Anspruch 9, **dadurch gekennzeichnet, daß** das Verstellglied (40) über einen biegsamen Lagerungsarm (38) mit dem Schalter (22) verbunden ist und daß durch Biegen des Lagerungsarms (38) der Rastzapfen (42) aus der verriegelten Position in die Verfahrposition gebracht wird.

11. Fahrzeuglenkrad nach einem der vorhergehenden Ansprüche, **dadurch gekennzeichnet, daß** der Schalter (22) als Multifunktionstastatur ausgeführt ist.

12. Fahrzeuglenkrad nach einem der vorhergehenden Ansprüche, **dadurch gekennzeichnet, daß** der Schalter (22) Teil einer als vormontierte Baugruppe ausgebildeten Schaltereinheit (18) ist, die ein am Lenkradkörper (12) starr befestigtes Gehäuse (20) aufweist, in welchem der Schalter (22) verschiebbar gelagert ist.

## Claims

1. A vehicle steering wheel comprising
a steering wheel body (12),
a spoke (10),
and at least one electric switch (22), wherein the switch (22), for adaptation to the length of the fingers of a driver, can be shifted by the driver to assume various positions,
**characterized in that**
the switch (22) is attached to the spoke (10) of the steering wheel body (12) and can be shifted lengthwise along the spoke with respect to the steering wheel body (12).

2. The vehicle steering wheel according to Claim 1, **characterized in that** the switch (22) is mounted in such a way that the adjustment can be made by the driver without the use of a tool.

3. The vehicle steering wheel according to Claim 1 or 2, **characterized in that** the switch (22) is accommodated in a linear guide (26, 30, 32).

4. The vehicle steering wheel according to Claim 3, **characterized in that** for mounting the switch (22), it can be inserted into the linear guide (26, 30, 32) transversely to the adjustment direction and is then held in the linear guide by being shifted subsequently.

5. The vehicle steering wheel according to any of the preceding claims, **characterized in that** a detachable form-fitting connection (36, 42) is provided, which can be locked in any position of the switch (22).

6. The vehicle steering wheel according to Claim 5, **characterized in that** the form-fitting connection is a toothed structure (36) that meshes with counter teeth (42) on the switch (22).

7. The vehicle steering wheel according to Claim 5 or 6, **characterized in that** a part (42) of the form-fitting connection that is associated with the switch (22) can be moved transversely to the adjustment direction out of a locked position and into a traversing position, in which an adjustment of the switch (22) is permissible, the part (42) of the form-fitting connection associated with the switch (22) being subsequently moved into another locked position.

8. The vehicle steering wheel according to any of the preceding claims, **characterized by** an adjustment element (40) which is to be gripped on a rear side of the steering wheel, which is connected to the switch (22) and by means of which the switch (22) is shifted.

9. The vehicle steering wheel according to any of Claims 5 to 7 or according to Claim 8, **characterized in that** a latching pin (42) is formed on the adjustment element (40) and forms the switch-side part of the form-fitting connection.

10. The vehicle steering wheel according to Claim 9, **characterized in that** the adjustment element (40) is connected to the switch (22) via a flexible bearing arm (38), and **in that** the latching pin (42) is brought out of the locked position and into the traversing position by bending the bearing arm (38).

11. The vehicle steering wheel according to any of the preceding claims, **characterized in that** the switch (22) is designed as a multi-function keypad.

12. The vehicle steering wheel according to any of the preceding claims, **characterized in that** the switch (22) is part of a switching unit (18) configured as a prefabricated assembly having a housing (20) which is rigidly attached to the steering wheel body (12) and in which the switch (22) is shiftably mounted.

## Revendications

1. Volant de direction de véhicule, comportant
un corps de volant de direction (12),
un rayon (10),
et au moins un commutateur (22) électrique, le commutateur pouvant être déplacé par un conducteur dans différentes positions pour l'adapter à la longueur des doigts du conducteur,
**caractérisé en ce que**
le commutateur (22) est fixé sur le rayon (10) du corps de volant de direction (12) et il peut être déplacé le long de celui-ci par rapport au corps de volant de direction (12).

2. Volant de direction de véhicule selon la revendication 1, **caractérisé en ce que** le montage du commutateur (22) est réalisé de telle sorte que le réglage peut être effectué par le conducteur sans avoir recours à un outil.

3. Volant de direction de véhicule selon la revendication 1 ou 2, **caractérisé en ce que** le commutateur (22) est reçu dans un guidage linéaire (26, 30, 32).

4. Volant de direction de véhicule selon la revendication 3, **caractérisé en ce que** pour le montage, le commutateur (22) peut être mis en place dans le guide linéaire (26, 30, 32) transversalement à la direction de réglage pour être maintenu dans le guidage linéaire par déplacement consécutif.

5. Volant de direction de véhicule selon l'une des revendications précédentes, **caractérisé en ce qu'**il est prévu une liaison (36, 42) par coopération de formes détachable qui peut être verrouillée dans chaque position du commutateur (22).

6. Volant de direction de véhicule selon la revendication 5, **caractérisé en ce que** la liaison par coopération de formes est une structure dentée (36) dans laquelle s'engage une denture antagoniste (42) sur le commutateur (22).

7. Volant de direction de véhicule selon la revendication 5 ou 6, **caractérisé en ce que** la partie (42), associée au commutateur (22), de la liaison par coopération de formes peut être amenée transversalement à la direction de réglage depuis une position verrouillée jusque dans une position de déplacement dans laquelle un réglage du commutateur (22) est permis, la partie (42), associée au commutateur (22), de la liaison par coopération de formes étant ensuite de nouveau ramenée dans une autre position verrouillée.

8. Volant de direction de véhicule selon l'une des revendications précédentes, **caractérisé par** un organe de réglage (40) à saisir sur la face postérieure du volant de direction, lequel est relié au commutateur (22) et par l'intermédiaire duquel le commutateur (22) est déplacé.

9. Volant de direction de véhicule selon l'une des revendications 5 à 7 et selon la revendication 8, **caractérisé en ce que** sur l'organe de réglage (40) est conformé un tenon d'enclenchement (42) qui forme la partie côté commutateur de la liaison par coopération de formes.

10. Volant de direction de véhicule selon la revendication 9, **caractérisé en ce que** l'organe de réglage (40) est relié au commutateur (22) par un bras de montage (38) flexible et **en ce qu'**en faisant fléchir le bras de montage (38), le tenon d'enclenchement (42) est amené depuis la position verrouillée jusque dans la position de déplacement.

11. Volant de direction de véhicule selon l'une des revendications précédentes, **caractérisé en ce que** le commutateur (22) est réalisé sous forme de clavier multifonctionnel.

12. Volant de direction de véhicule selon l'une des revendications précédentes, **caractérisé en ce que** le commutateur (22) fait partie d'une unité de commutateur (18) réalisée sous forme d'ensemble préassemblé qui présente un boîtier (20) fixé de manière rigide sur le corps de volant de direction (12) et dans lequel le commutateur (22) est monté de manière déplaçable.
